# EUROPÄISCHE PATENTANMELDUNG

(11) **EP 2 365 438 A1**
(43) Veröffentlichungstag der Anmeldung: **14.09.2011**
(21) Anmeldenummer: 10155875.7
(22) Anmeldetag: 09.03.2010
(51) Int. Cl.: G06F 9/445

(54) **Verfahren zum Betrieb eines Automatisierungssystems**

(71) Anmelder: SIEMENS AKTIENGESELLSCHAFT, 80333 München (DE)
(72) Erfinder: Graf, Markus, 76761 Rülzheim (DE)

(57) **Zusammenfassung**

Es wird ein Verfahren zum Betrieb eines Automatisierungssystems (10), das als Automatisierungslösung ein Steuerungsprogramm (28) mit einer Mehrzahl von Softwarebausteinen (32) ausführt, mit folgenden Schritten zum Austausch zumindest eines Softwarebausteins - alter Softwarebaustein (38) - zur Laufzeit des Steuerungsprogramms (28) gegen einen neuen Softwarebaustein (42) angegeben:
― Laden des neuen Softwarebausteins (42) in einen Speicher (26) des Automatisierungssystems (10);
― Vergleichen eines zum alten Softwarebaustein (38) gehörigen alten Datenbereichs (40) mit einem zum neuen Softwarebaustein (42) gehörigen neuen Datenbereich (44);
― Generierung von Programmcodeanweisungen zur Umsetzung von Daten für oder vom alten Datenbereich (40) in Daten für oder vom neuen Datenbereich (44);
― Austauschen einer Programmcodeanweisung zum Aufruf des alten Softwarebausteins (38) gegen Programmcodeanweisungen zum Aufruf der generierten Programmcodeanweisungen zur Datenumsetzung und zum Aufruf des neuen Softwarebausteins (42).

## Beschreibung

Die Erfindung betrifft ein Verfahren zum Betrieb eines Automatisierungssystems, in dessen Speicher als Automatisierungslösung ein Steuerungsprogramm gespeichert ist und in diesem Zusammenhang speziell eine Situation, wie sie sich ergibt, wenn zur Laufzeit des Steuerungsprogramms Teile davon gegen aktualisierte Teile ausgetauscht werden müssen, ohne dass die Ausführung des Steuerungsprogramms und insgesamt der Betrieb des Automatisierungssystems merklich unterbrochen wird. Ein solcher Austausch von Teilen des Steuerungsprogramms - solche Teile des Steuerungsprogramms werden im Folgenden als Softwarebausteine bezeichnet - wird in der Literatur als Deltaladen bezeichnet.

Obwohl die Problematik des Deltaladens bereits seit langem diskutiert wird, gibt es derzeit für Automatisierungssysteme nur Lösungen, die dann verwendbar sind, wenn keine Änderung an der Schnittstelle der jeweiligen Softwarebausteine erfolgt. Der Grund dafür ist, dass solche Daten in einem dem Softwarebaustein zugeordneten Datenbereich, dem so genannten Instanz-DB, geordnet hintereinander liegen. Beim Verändern eines Datenbereichs verschieben sich also die Adresslagen aller nachfolgenden Daten. Wegen der Verschiebung der Adresslagen nachfolgender Datenbereiche lässt sich ein geladener Instanz-DB auch nicht ohne weiteres verlängern.

Wenn also mit den bisher zur Verfügung stehenden Lösungen eine Änderung oder Korrektur an einem Softwarebaustein vorgenommen wird, die nur über eine Erweiterung der Daten in dem zugehörigen Datenbereich gelöst werden kann (neue Ein- oder Ausgänge oder zusätzliche Daten), so ist dies heute nur in das Automatisierungssystem ladbar, wenn dieses vorher in einen Stoppzustand überführt wird, wenn also die Ausführung des Steuerungsprogramms unterbrochen wird. Bei einem im Stopp befindlichen Automatisierungssystem ist damit auch die Steuerung und/oder Überwachung des jeweiligen technischen Prozesses während der Dauer dieses Zustands unterbrochen.

Eine Aufgabe der Erfindung besteht entsprechend darin, ein Verfahren zum Betrieb eines Automatisierungssystems anzugeben, bei dem die o. g. Nachteile vermieden werden oder zumindest deren Auswirkungen reduziert sind.

Diese Aufgabe wird erfindungsgemäß mit den Merkmalen des Anspruchs 1 gelöst. Dazu sind bei einem Verfahren der eingangs genannten Art, also einem Verfahren zum Betrieb eines Automatisierungssystems, die nachfolgend aufgeführten Schritte vorgesehen. Für das Automatisierungssystem wird vorausgesetzt, dass dieses einen oder mehrere Speicher und eine oder mehrere Verarbeitungseinheiten umfasst, wobei in dem Speicher als Automatisierungslösung ein Steuerungsprogramm gespeichert ist, das durch die Verarbeitungseinheit ausgeführt wird. Das Steuerungsprogramm umfasst eine Mehrzahl von Softwarebausteinen, die bei dessen Ausführung durch einen ebenfalls vom Steuerungsprogramm umfassten Ablaufgruppenbaustein aufgerufen werden. Die Schritte zum Austausch zumindest eines Softwarebausteins - alter Softwarebaustein - zur Laufzeit des Steuerungsprogramms gegen einen neuen Softwarebaustein, also insbesondere einen Softwarebaustein mit geänderter Schnittstelle, sind im Einzelnen:
- Vergleichen eines zum alten Softwarebaustein gehörigen alten Datenbereichs mit einem zum neuen Softwarebaustein gehörigen neuen Datenbereich;
- Generieren von Programmcodeanweisungen zur Umsetzung von Daten für oder vom alten Datenbereich in Daten für oder vom neuen Datenbereich;
- Laden des neuen Softwarebausteins und des neuen Datenbereichs;
- Austauschen einer Programmcodeanweisung zum Aufruf des alten Softwarebausteins im Ablaufgruppenbaustein gegen Programmcodeanweisungen zum Aufruf der generierten Programmcodeanweisungen zur Datenumsetzung sowie zum Aufruf des neuen Softwarebausteins.

Durch das Generieren der Programmcodeanweisungen zur Umsetzung von Daten für den oder vom alten Datenbereich in Daten für den oder vom neuen Datenbereich ist sichergestellt, dass das Steuerungsprogramm mit dessen nicht von dem Austausch betroffenen Softwarebausteinen oder andere Steuerungsprogramme weiterlaufen können. Solche Softwarebausteine oder andere Steuerungsprogramme greifen eventuell auf den alten Datenbereich des auszutauschenden alten Datenbausteins zu. Damit diese Daten auch für den neuen Softwarebaustein zugänglich werden, erfolgt ein Übertragen der Daten aus dem alten Datenbereich in den neuen Datenbereich. Mit der Verfügbarkeit der Daten in dem neuen Datenbereich kann der neue Softwarebaustein unmittelbar die Funktionalität des ersetzten alten Softwarebausteins übernehmen.

Wenn der neue Softwarebaustein Daten generiert, die für andere Bestandteile des Steuerungsprogramms oder andere Steuerungsprogramme relevant sind, werden diese im neuen Datenbereich abgelegt. Die restlichen Bestandteile des Steuerungsprogramms oder andere Steuerungsprogramme greifen jedoch zumindest zunächst nicht auf den neuen Datenbereich, sondern auf den alten Datenbereich des zu ersetzenden Softwarebausteins zu. Damit also eventuell von dem neuen Softwarebaustein generierte Daten auch für die restlichen Bestandteile des Steuerungsprogramms oder andere Steuerungsprogramme verfügbar werden, umfassen die Programmcodeanweisungen zur Datenumsetzung auch Kopieranweisungen, um Daten aus dem neuen Datenbereich in den alten Datenbereich zu transferieren. Mit der Verfügbarkeit der vom neuen Softwarebaustein generierten Daten im alten Datenbereich kann das Steuerungsprogramm mit seinen nicht vom Austausch betroffenen Bestandteilen unmittelbar auch Daten verarbeiten, die von dem neuen Softwarebaustein generiert wurden. Gleiches gilt für eventuell andere Steuerungsprogramme.

Die Gesamtheit der Programmcodeanweisungen zur beschriebenen Datenumsetzung wird im Folgenden kurz als Kopierroutine bezeichnet. Damit die Kopierroutine auch wirksam werden kann, ist deren Aufruf durch denjenigen Ablaufgruppenbaustein vorgesehen, der den alten Softwarebaustein aufruft oder bisher den alten Softwarebaustein aufgerufen hat. Im Ablaufbaugruppenbaustein ist gleichfalls der Aufruf des neuen Softwarebausteins vorgesehen. Die Programmcodeanweisung zum Aufruf des neuen Softwarebausteins tritt im Ablaufgruppenbaustein an die Stelle des bisherigen Aufrufs des alten Softwarebausteins. Ein Aufruf der generierten Kopierroutine erfolgt aus dem Ablaufgruppenbaustein vor und nach dem Aufruf des neuen Softwarebausteins, insbesondere unmittelbar vor und unmittelbar nach einem solchen Aufruf; tatsächlich umfasst die Kopierroutine also einen ersten und einen zweiten Teil. Zum Aufruf der Kopierroutine umfasst der Ablaufgruppenbaustein jeweils entsprechende (Aufruf-)Programmcodeanweisungen. Das Umkopieren der Daten vom alten Datenbereich in den neuen Datenbereich erfolgt vor Aufruf des neuen Softwarebausteins durch den ersten Teil der Kopierroutine. Entsprechend erfolgt das Umkopieren der Daten aus dem neuen Datenbereich in den alten Datenbereich nachdem der neue Softwarebaustein abgearbeitet ist durch Aufruf des zweiten Teils der Kopierroutine.

Der Ansatz gemäß der Erfindung ermöglicht also einen Austausch eines oder mehrerer Softwarebausteine in einem Steuerungsprogramm, ohne dass eine Unterbrechung des Steuerungsprogramms oder anderer Steuerungsprogramme erforderlich wäre. Das Steuerungsprogramm kann also zur Laufzeit geändert werden. Wenn hier von anderen Steuerungsprogrammen die Rede ist, meint dies z. B. ein Bedien- und Beobachtungsprogramm, das als Steuerungsprogramm von einem als Bedien- und Beobachtungssystem vorgesehenen Automatisierungsgerät ausgeführt wird.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass das Steuerungsprogramm auf Programmcodeanweisungen durchsucht wird, die sich auf den alten Datenbereich beziehen. Bevorzugt wird dabei nicht das Steuerungsprogramm des Automatisierungssystems sondern ein in einem Engineeringsystem, also einer Programmierumgebung, vorgehaltenes Steuerungsprogramm oder die Gesamtheit aller Steuerungsprogramme des Automatisierungssystems durchsucht. In dem Engineeringsystem - einer Softwareumgebung, die üblicherweise auf einem Programmiergerät oder dergleichen abläuft - entsteht das Steuerungsprogramm für das Automatisierungssystem oder es werden Änderungen daran vorgenommen. Das Durchsuchen des Steuerungsprogramms im Engineeringsystem kann schneller als in den sonstigen Automatisierungsgeräten des Automatisierungssystems und vor allem ohne deren bzw. dessen Beeinflussung erfolgen. Ein Steuerungsprogramm des Automatisierungssystems kann ein verteiltes Steuerungsprogramm sein, speziell dann, wenn auch das Automatisierungssystem ein verteiltes System, also ein System mit mehreren Automatisierungsgeräten ist. Wenn das Automatisierungssystem nur ein Automatisierungsgerät umfasst, meinen die Begriffe Automatisierungssystem und Automatisierungsgerät die gleiche Einheit. Wenn das Automatisierungssystem zumindest ein für Steuerungs-und Überwachungszwecke vorgesehenes Automatisierungsgerät und zumindest ein als Bedien- und Beobachtungsgerät vorgesehenes Automatisierungsgerät umfasst, umfasst das Steuerungsprogramm des Automatisierungssystems zumindest ein Steuerungsprogramm für das mindestens eine Automatisierungsgerät und darüber hinaus zumindest ein Steuerungsprogramm für das mindestens eine Bedien- und Beobachtungsgerät. Die Reichweite des Begriffs Steuerungsprogramm richtet sich damit nach dem jeweiligen Zusammenhang.

Beim Durchsuchen des Steuerungsprogramms aufgefundene Programmcodeanweisungen werden so geändert, dass sie sich auf den neuen Datenbereich beziehen. Eine solche Änderung der Programmcodeanweisungen des Steuerungsprogramms kann auch als "Mapping" bezeichnet werden. Die Umsetzung ermöglicht das spätere Entfernen der Programmcodeanweisungen zur Datenumsetzung vom alten Datenbereich zum neuen Datenbereich. Indem die im Steuerungsprogramm als sich auf den alten Datenbereich beziehend aufgefundenen Programmcodeanweisungen so geändert werden, dass sie sich auf den neuen Datenbereich beziehen, besteht keine Notwendigkeit, für diese Programmcodeanweisungen Daten im alten Datenbereich zur Verfügung zu halten. Wenn alle derartigen Programmcodeanweisungen geändert sind, umfasst das Steuerungsprogramm, soweit der neue Softwarebaustein betroffen ist, nur noch Programmcodeanweisungen, die sich auf den neuen Datenbereich beziehen. Sobald dies gewährleistet ist, können der alte Datenbereich und die Programmcodeanweisungen zur Datenumsetzung vom alten zum neuen Datenbereich entfernt werden. Unnötig gewordene Bestandteile des Steuerungsprogramms können also gelöscht werden und es wird nur der tatsächlich erforderliche Speicherbereich belegt.

Bevorzugt ist vorgesehen, dass dem neuen Softwarebaustein eine Referenz zugewiesen wird, die bisher den alten Softwarebaustein bezeichnet hatte. Als Referenz kommt hier ein Name oder dergleichen in Betracht, z. B. "unktionsbaustein 10" oder "FB 10". Beim erstmaligen Laden des neuen Softwarebausteins wird diesem ein temporärer Name oder eine temporäre Referenz zugewiesen, damit er gleichzeitig mit dem alten Softwarebaustein geladen sein kann. Wenn später dem neuen Softwarebaustein eine Referenz zugewiesen wird, die bisher den alten Softwarebaustein bezeichnet hatte, ist gewährleistet, dass diejenige Einheit, die ursprünglich den alten Softwarebaustein bereitgestellt hatte, also z. B. Programmiergerät mit einem Engineeringsystem, den neuen Softwarebaustein (unter der Referenz des alten Softwarebausteins) wieder als "ihren" Baustein erkennt. Die Zuweisung der bisher den alten Softwarebaustein bezeichnenden Referenz an den neuen Softwarebaustein kann erfolgen, indem der neue Softwarebaustein unter der Referenz des alten Softwarebausteins erneut geladen wird und dabei den alten Softwarebaustein ersetzt. Eventuell kommt auch ein Umbenennen des neuen Softwarebausteins nach dessen erstmaligem Laden in Betracht. Das Umbenennen bewirkt dann die Verwendung derjenigen Referenz, die bisher den alten Softwarebaustein bezeichnet hatte, als Referenz für den neuen Softwarebaustein.

Weiter bevorzugt ist vorgesehen, dass die zunächst im Ablaufgruppenbaustein ausgetauschten Programmcodeanweisungen wieder entfernt werden und an deren Stelle im Ablaufgruppenbaustein eine Programmcodeanweisung zum Aufruf des neuen Softwarebausteins unter der bisherigen Referenz des alten Softwarebausteins eingefügt wird. Nach einer solchen Änderung sind die Daten im Ablaufgruppenbaustein im Wesentlichen wieder in einem Zustand, wie er vor der Änderung durch Einfügen des neuen Softwarebausteins bestanden hat. Der Ablaufgruppenbaustein enthält keine Programmcodeanweisungen zum Aufruf der generierten Kopierroutine mehr und der Ablaufgruppenbaustein enthält für den neuen Softwarebaustein nur noch eine Programmcodeanweisung für dessen Aufruf, und zwar unter der Referenz, unter der an gleicher Stelle bisher der alte Softwarebaustein aufgerufen wurde.

Vorteilhaft ist vorgesehen, dass die vom alten Softwarebaustein und/oder vom alten Datenbereich im Speicher des Automatisierungssystems belegten Speicherbereiche wieder freigegeben werden. Damit ist eine optimale Ausnutzung des im Automatisierungssystem zur Verfügung stehenden Speichers gewährleistet und der ohnehin nicht mehr aufgerufene alte Softwarebaustein und der damit korrelierte alte Datenbereich belegen nicht mehr unnötig Ressourcen des Automatisierungssystems.

In einer besonderen Ausführungsform des Verfahrens ist vorgesehen, dass aufgefundene Programmcodeanweisungen, die sich auf den alten Datenbereich beziehen und die nicht automatisch in sich auf den neuen Datenbereich beziehende Programmcodeanweisungen geändert werden können, in eine Aufgabenliste übernommen werden. Die Aufgabenliste steht zur manuellen Bearbeitung durch einen Bediener zur Verfügung, und zwar bevorzugt für eine Bearbeitung im Engineeringsystem. Diese manuelle Bearbeitung wird zum Ziel haben, die automatisch generierte Kopierroutine zur Datenumsetzung vom alten Speicherbereich in den neuen Speicherbereich für jeden in der Aufgabenliste befindlichen Eintrag zu ergänzen, so dass nach Bearbeitung der kompletten Aufgabenliste eine teilweise automatisch generierte und eine teilweise manuell ergänzte Kopierroutine zur Datenumsetzung aus dem alten Datenbereich in den neuen Datenbereich und umgekehrt zur Verfügung stehen. Ziel der Aufgabenliste ist es also, Zugriffe (Verschaltungen) aufzuzeigen, die nicht automatisch umgesetzt werden können, z. B. Zugriffe, die inkompatible Typen involvieren. Ein Beispiel für eine derartige Inkompatibilität ist eine Programmcodeanweisung, die aus dem Datenbereich ein Datum des Typs "Langworf" lesen will, wenn aufgrund der Änderung des Softwarebausteins für dieses Datum im Datenbereich nur Speicher für ein Datum des Typs "Wort" vorgesehen ist.

Besonders bevorzugt ist dabei vorgesehen, dass bei eventuellen Programmcodeanweisungen, die sich auf den alten Datenbereich beziehen und die nicht automatisch in sich auf den neuen Datenbereich beziehende Programmcodeanweisungen geändert werden können, der Austausch des Aufrufs des neuen Programmbausteins anstelle des alten Softwarebausteins im Ablaufgruppenbaustein so lange zurückgestellt oder verhindert wird, bis die aus derartigen Programmcodeanweisungen resultierende Aufgabenliste geleert ist. Damit wird erreicht, dass der Aufruf des neuen Softwarebausteins erst dann möglich ist, wenn dessen Ver- und Entsorgung durch entsprechendes Umkopieren aus dem alten Datenbereich in den neuen Datenbereich und umgekehrt vollständig gewährleistet ist, so dass die Funktionstüchtigkeit des Steuerungsprogramms insgesamt garantiert ist.

Bevorzugt ist bei einem Verfahren zum Betrieb eines Automatisierungssystems, wie hier und nachfolgend beschrieben, vorgesehen, dass beim Austauschen einer Mehrzahl neuer Softwarebausteine gegen eine entsprechende Mehrzahl alter Softwarebausteine aus der Mehrzahl der neuen Softwarebausteine jeweils sukzessive ein neuer Softwarebaustein gegen einen entsprechenden alten Softwarebaustein ausgetauscht wird und eine Auswahl einer Austauschreihenfolge innerhalb der Mehrzahl der neuen Softwarebausteine entsprechend einer jeweiligen Aufrufhierarchie des jeweiligen alten oder neuen Softwarebausteins erfolgt. Dies berücksichtigt zum einen, dass nicht beliebig viele Softwarebausteine gleichzeitig ausgetauscht werden können. Zum anderen erfolgt der Austauschvorgang entsprechend der Aufrufhierarchie nach einer klaren Struktur, die z. B. auch das manuelle Abarbeiten einer Aufgabenliste vereinfacht, weil sich alle in der Aufgabenliste vorhandenen Einträge auf ein und denselben Softwarebaustein beziehen.

Insgesamt betrifft die Erfindung auch ein nach dem Verfahren arbeitendes Automatisierungssystem, also ein Automatisierungssystem mit einem Speicher und einer Verarbeitungseinheit zum Ausführen eines in den Speicher ladbaren Steuerungsprogramms, wobei zur Ausführung des Verfahrens, wie hier und nachfolgend beschrieben, Mittel zu dessen Implementierung, also zum Austauschen eines neuen Softwarebausteins gegen einen bisher von dem Steuerungsprogramm umfassten alten Softwarebaustein, und zwar zur Laufzeit des Steuerungsprogramms vorgesehen sind. Insoweit betrifft die Erfindung auch ein Computerprogramm mit durch einen Computer ausführbaren Programmcodeanweisungen zur Implementierung des Verfahrens und seiner Ausgestaltungen, wenn dieses auf einem Computer, also durch das Automatisierungssystem oder ein davon umfasstes Automatisierungsgerät oder eventuell ein zumindest temporär mit dem Automatisierungssystem verbundenes Engineeringsystem, ausgeführt wird. Schließlich betrifft die Erfindung auch ein Speichermedium mit einem durch einen Computer ausführbaren derartigen Computerprogramm, also einem Programmcodeanweisungen umfassenden Computerprogramm, mit dem das erfindungsgemäße Verfahren und/oder einzelne Ausgestaltungen davon implementiert ist bzw. sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Die Funktionalität eines Softwarebausteins wird durch dafür vorgesehene Programmcodeanweisungen bestimmt. Wenn ein Softwarebaustein zumindest einmal in einem Steuerungsprogramm verwendet wird, werden diese Programmcodeanweisungen genau einmal Bestandteil des Steuerungsprogramms. Der Aufruf eines Softwarebausteins erfolgt mit dessen Datenbereich, dem Instanz-DB. Wenn ein Softwarebaustein mehrfach verwendet wird, ergibt sich für jede derartige Verwendung ein eigener Datenbereich, während die Programmcodeanweisungen des Software-bausteins nach wie vor nur einmal Bestandteil des Steuerungsprogramms werden. Als Beispiel mag eine Situation dienen, bei der durch einen Softwarebaustein die Funktionalität eines P-Reglers (Proportionalregler) implementiert wird. Eine solche Funktionalität kann in einem Steuerungsprogramm mehrfach verwendet werden, z. B. mit unterschiedlichen Proportionalitätsfaktoren und/oder für unterschiedliche Regelungsvorgänge. Wenn z. B. bei einem Chargenprozess der Füllstand mehrerer Reaktoren mittels eines Proportionalreglers auf das Erreichen eines Sollfüllstands überwacht werden soll, kann für jede derartige Reaktorfüllstandsregelung dieselbe Funktionalität verwendet werden. Unterschiedliche Parameter werden dabei in unterschiedlichen Instanz-DBs vorgehalten. Die Aufrufe der Reaktorfüllstandsregelung erfolgen dann mit dem jeweiligen Instanz-DB. Wenn sich die Funktionalität eines solchen Reglerbausteins so ändert, dass dies Auswirkungen auf die Schnittstelle, also den Datenbereich (= Instanz-DB), hat oder wenn nur die Schnittstelle geändert wird, müssen alle Verwendungen (= Vorkommen) des Reglerbausteins im Steuerungsprogramm geändert werden. Dazu ist auch bei einer mehrfachen Verwendung des Reglerbausteins nur einmal die neue Funktionalität (= Programmcodeanweisungen) in das Steuerungsprogramm aufzunehmen. Die alte Funktionalität bleibt zunächst noch von dem Steuerungsprogramm umfasst. Der Aufruf der neuen Funktionalität erfolgt mit einem entsprechenden neuen Datenbereich, wobei ein bisheriger, alter Datenbereich ebenfalls zunächst noch erhalten bleibt. Wegen des Austausches zur Laufzeit kann (wird) das Steuerungsprogramm zunächst noch Verschaltungen auf den alten Datenbereich umfassen. Deshalb ist eine Kopierroutine zum Übertragen der Daten aus dem alten Datenbereich oder mehreren alten Datenbereichen in den jeweiligen neuen Datenbereich und umgekehrt vorgesehen. Sukzessive oder auch gruppenweise erfolgt im Steuerungsprogramm das Anlegen neuer Datenbereiche und Kopierroutinen für jede unabhängige Verwendung des Reglerbausteins. Wenn danach die ursprüngliche Funktionalität des Reglerbausteins nicht mehr aufgerufen wird, können die entsprechenden Programmcodeanweisungen aus dem Steuerungsprogramm entfernt werden. Wenn alle Verschaltungen, die sich auf alte Datenbereiche bezogen hatten, durch entsprechende, sich auf neue Datenbereiche beziehende Verschaltungen ersetzt wurden, werden auch die alten Datenbereiche und die Kopierroutinen nicht mehr benötigt. Bei diesem Konzept ist es unerheblich, ob das Steuerungsprogramm ein einzelnes Programm oder eventuell eine Gruppe von Programmen ist, die eventuell sogar auf verteilten Geräten, also einem oder mehreren Automatisierungsgeräten und/oder einem oder mehreren Bedien- und Beobachtungssystemen, ablaufen. Das Ersetzen erfolgt unter Kontrolle eines Engineeringsystems, wie es normalerweise zumindest für die Erstellung eines Steuerungsprogramms Verwendung findet. Das Engineeringsystem kann das Steuerungsprogramm oder dessen Teile auf die entsprechenden Geräte laden. Bei der Ausführung der Erfindung lädt das Engineeringsystem oder eine entsprechende Funktionalität die Programmcodeanweisungen des exemplarisch als geändert angenommenen Reglerbausteins auf das oder jedes von der Änderung betroffene Gerät. Sodann erfolgen auf jedem betroffenen Gerät das Bereitstellen von neuen Datenbereichen und die Einplanung von Aufrufen des neuen Reglerbausteins mit diesen neuen Datenbereichen und der Kopierroutine. Die Funktionalität der Kopierroutine wird ebenfalls vom Engineeringsystem bestimmt, eventuell indem ein Bediener am Engineeringsystem einen automatisch generierten Teil der Kopierroutine manuell ergänzt. Das Engineeringsystem übernimmt zum Abschluss des Ersetzens des Reglerbausteins auch die Entfernung nicht mehr benötigter Teile aus dem Steuerungsprogramm.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:
- FIG 1: ein Automatisierungssystem mit zumindest einem Automatisierungsgerät,
- FIG 2: ein Automatisierungsgerät mit weiteren Details, nämlich insbesondere einem davon umfassten Speicher und einem in dem Speicher vorgehaltenen Steuerungsprogramm,
- FIG 3: ein Steuerungsprogramm mit einer Anzahl davon umfasster Softwarebausteine und einem Ablaufgruppenbaustein zu deren Aufruf,
- FIG 4: das Steuerungsprogramm mit einem zu ersetzenden alten Softwarebaustein und einem als dessen Ersatz vorgesehenen neuen Softwarebaustein,
- FIG 5: eine graphische Veranschaulichung des Ablaufs beim Austausch eines neuen Softwarebausteins gegen einen zu ersetzenden alten Softwarebaustein,
- FIG 6: eine graphische Veranschaulichung von Kopieroperationen zwischen einem dem alten Softwarebaustein zugehörigen alten Datenbereich und einem entsprechenden, dem neuen Softwarebaustein zugeordneten neuen Datenbereich und
- FIG 7: eine graphische Veranschaulichung von Änderungen von Programmcodeanweisungen des Steuerungsprogramms, die sich auf den alten Datenbereich beziehen, in entsprechende, sich auf den neuen Datenbereich beziehende Programmcodeanweisungen.

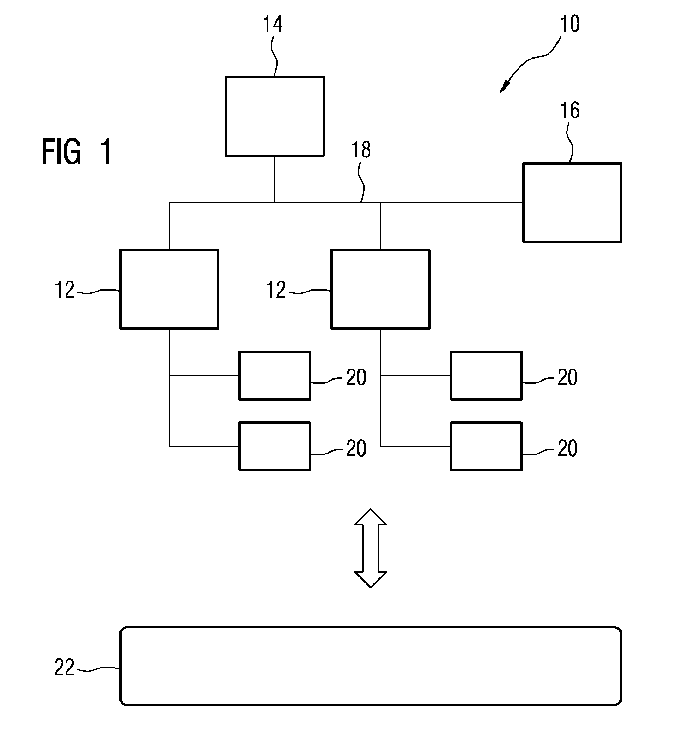

FIG 1 zeigt ein insgesamt mit 10 bezeichnetes Automatisierungssystem, das zumindest ein Automatisierungsgerät 12 - in der dargestellten Ausführungsform mehrere Automatisierungsgeräte 12, darunter eines als Leitstation oder Engineeringsystem 14 und eines als Bedien- und Beobachtungsgerät 16 - umfasst. Die Automatisierungsgeräte 12, 14, 16 sind untereinander kommunikativ, z. B. über einen Bus 18, verbunden. Insgesamt sind sie, eventuell ohne eine nur temporär angeschlossene und als Engineeringsystem fungierende Leitstation, zusammen mit eventuellen dezentralen Peripheriegeräten 20 zur Steuerung und/oder Überwachung eines nicht näher dargestellten technischen Prozesses 22 bestimmt.

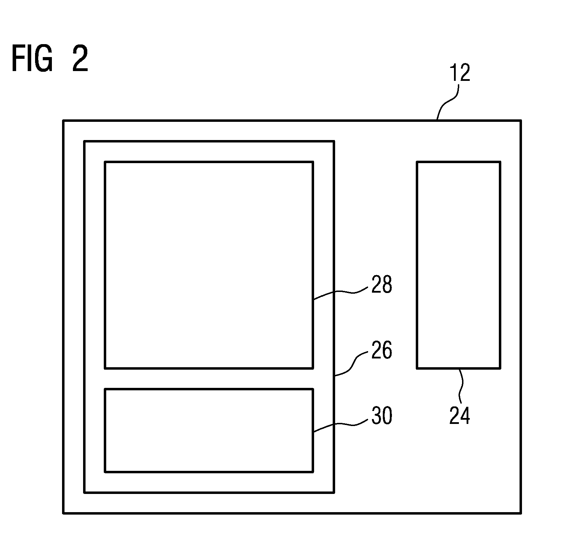

FIG 2 zeigt schematisch vereinfacht am Beispiel eines der Automatisierungsgeräte 12, 14, 16 aus FIG 1, dass diese jeweils eine Verarbeitungseinheit nach Art eines Prozessors 24 oder dergleichen sowie einen Speicher 26 umfassen. In den Speicher 26 ist ein Steuerungsprogramm 28 ladbar, welches für das jeweilige Automatisierungsgerät 12, 14, 16 dessen Interaktion mit dem technischen Prozess 22 festlegt. Unter Kontrolle des Steuerungsprogramms 28 erfolgt also z. B. ein Auslesen von Messwerten von im technischen Prozess 22 angeordneten Sensoren (nicht dargestellt) oder zur Beeinflussung des technischen Prozesses 22 eine Ansteuerung dort vorgesehener, nicht dargestellter Aktorik. Das Steuerungsprogramm 28 be- oder verarbeitet ebenfalls im Speicher 26 gespeicherte Daten 30. Als Steuerungsprogramm 28 kann das jeweils in einem Speicher eines Automatisierungsgeräts 12, 14, 16 gespeicherte Programm oder die Gesamtheit aller derartigen Programme aufgefasst werden, wobei das Steuerungsprogramm in einem als Bedien- und Beobachtungsgerät fungierenden Automatisierungsgerät 16 entsprechend normalerweise auch ein Bedien- und Beobachtungsprogramm ist.

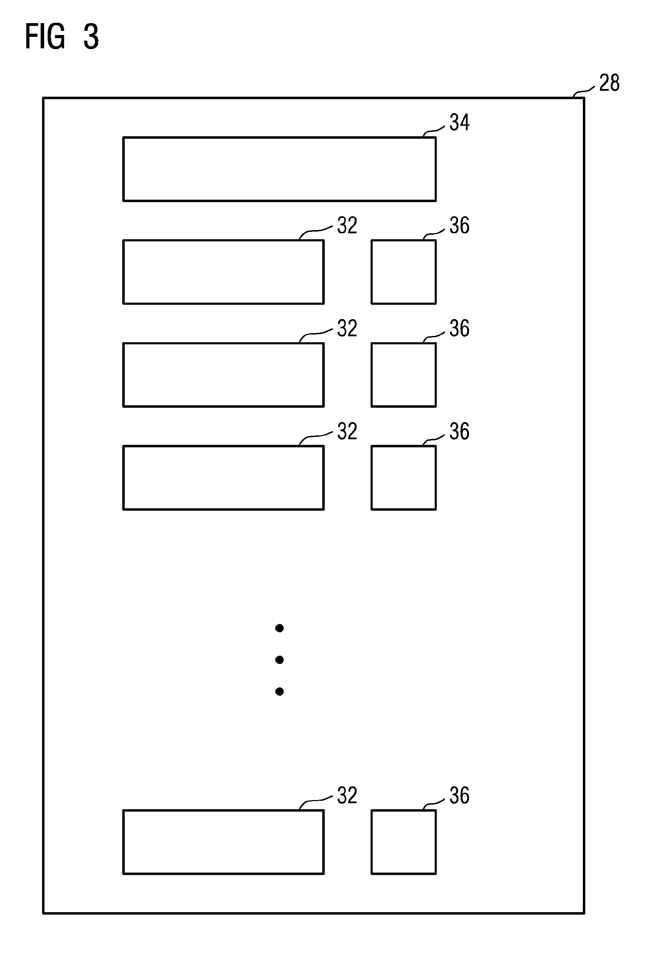

FIG 3 zeigt schematisch vereinfacht die grundlegende Struktur eines Steuerungsprogramms 28. Dieses umfasst eine Mehrzahl von Softwarebausteinen 32, die jeweils in an sich bekannter Art und Weise Programmcodeanweisungen (nicht dargestellt) umfassen. Jeder Softwarebaustein 32 ist normalerweise zur Implementierung einer bestimmten Funktionalität des Steuerungsprogramms 28 vorgesehen. Beispielhaft kommt ein erster Softwarebaustein 32 für eine Erfassung von analogen Messwerten im technischen Prozess 22, z. B. Wegdaten, in Betracht. Davon ausgehend könnte als ein zweiter Softwarebaustein 32 eine Instanz eines Softwarebausteins vorgesehen sein, der einen Regelungsalgorithmus implementiert (Regelungsbaustein). Der zweite Softwarebaustein 32 ist dann zur Regelung eines Bewegungsvorgangs aufgrund der erfassten Wegdaten verwendbar. Weitere Instanzen desselben Regelungsbausteins können an anderer Stelle im Steuerungsprogramm 28 vorgesehen sein. Solche weiteren Instanzen unterscheiden sich nicht hinsichtlich ihrer Funktionalität von dem oben exemplarisch erwähnten zweiten Softwarebaustein 32 sondern nur im Hinblick auf die jeweils ver- und bearbeiteten Daten, so dass z. B. eine Temperatur-, Füllstands- und Geschwindigkeitsregelung usw. realisierbar ist.

Die Softwarebausteine 32 werden durch einen ebenfalls vom Steuerungsprogramm 28 umfassten Ablaufgruppenbaustein 34 aufgerufen, und zwar in einer vorgebbaren Reihenfolge. Für vereinfachte Verhältnisse ist nur ein Ablaufgruppenbaustein 34 dargestellt. Tatsächlich kann jedes Steuerungsprogramm 28 eine Vielzahl von Ablaufgruppenbausteinen 34 umfassen.

Das Steuerungsprogramm 28 wird mit seinen Softwarebausteinen 32 vom Prozessor 24 ausgeführt, und zwar indem der Ablaufgruppenbaustein 34 - oder in einer komplexeren Ausführung mehrere Ablaufgruppenbausteine 34 - in einem jeweils vorgegebenen Zeitraster ausgeführt wird bzw. werden. Die Ausführung des Ablaufgruppenbausteins 34 gibt entsprechend der dort projektierten Aufrufreihenfolge eine Hierarchie der Softwarebausteine 32 und eine Abfolge, in der diese nacheinander ausgeführt werden, vor. Damit ergibt sich auch für deren Ausführung eine quasi zyklische Ausführung.

Jedem Softwarebaustein 32 sind jeweils ein oder mehrere Datenbereiche 36 zugeordnet. Der Datenbereich 36 fungiert als Schnittstelle für den jeweiligen Softwarebaustein 32 (um z. B. einer ersten Instanz eines Reglerbausteins Daten für eine Regelung eines Bewegungsvorgangs und einer weiteren Instanz desselben Reglerbausteins Daten für eine Temperaturregelung übermitteln zu können). Im Datenbereich 36 werden dazu durch das Steuerungsprogramm 28 oder andere Softwarebausteine 32 Daten hinterlegt, die der jeweilige Softwarebaustein 32 als Eingangsdaten zu verarbeiten hat. Während seiner Ausführung legt der jeweilige Softwarebaustein 32 im Datenbereich 36 solche Daten ab, die als Ausgangsdaten des jeweiligen Softwarebausteins 32 dem Steuerungsprogramm 28 insgesamt oder anderen Softwarebausteinen 32 zur Verfügung stehen sollen.

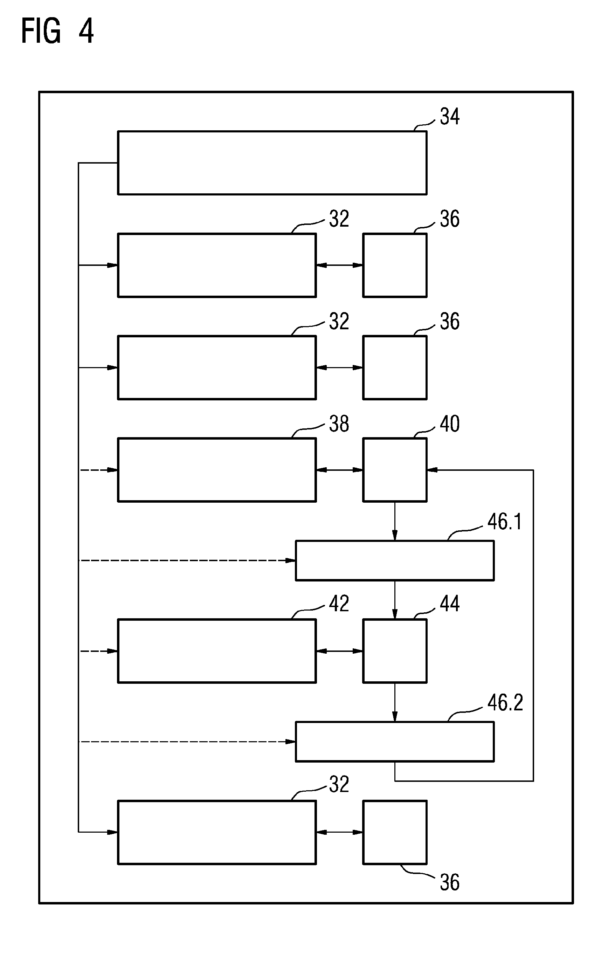

FIG 4 zeigt im Wesentlichen das Steuerungsprogramm 28, wie bereits in FIG 3 dargestellt. Zur Erläuterung des Ansatzes gemäß der Erfindung sind zusätzliche Details eingefügt.

FIG 4 stellt einen der Softwarebausteine 32 nur zur optischen Unterscheidbarkeit in einer leicht nach rechts gerückten Position dar. Für diesen Softwarebaustein soll für den weiteren Verlauf der Beschreibung angenommen werden, dass dieser im Steuerungsprogramm 28 zu ersetzen ist. Entsprechend werden dieser Softwarebaustein im Folgenden als alter Softwarebaustein 38 und der zugehörige Datenbereich als alter Datenbereich 40 bezeichnet. Analog ist ein weiterer Softwarebaustein, ebenfalls nur zur optischen Unterscheidung, in einer leicht nach links gerückten Position dargestellt. Für die weitere Beschreibung soll dieser Softwarebaustein einen neuen Softwarebaustein 42 und der zugehörige Datenbereich einen neuen Datenbereich 44 darstellen. Der neue Softwarebaustein 42 kommt zur Laufzeit des Steuerungsprogramms 28 zu diesem hinzu und soll den alten Softwarebaustein 38 ersetzen. Dazu sieht die Erfindung den im Folgenden beschriebenen Ansatz vor:

Der neue Softwarebaustein 42 wird in den Speicher 26 (FIG 2) des jeweiligen Automatisierungsgeräts 12 geladen, also in einen vom Automatisierungssystem 10 umfassten Speicher 26. Vorher oder nachher wird der zum alten Softwarebaustein 38 gehörige alte Datenbereich 40 mit dem zum neuen Softwarebaustein 42 gehörigen neuen Datenbereich 44 verglichen, wobei sich der Vergleich nicht auf die Inhalte der Datenbereiche 40, 44 sondern auf deren Struktur, also Anzahl und jeweils Typ der dort ablegbaren Daten, bezieht. Dies erfolgt bevorzugt offline anhand der noch im Engineeringsystem vorgehaltenen Originaldaten des Steuerungsprogramms 28. Anhand des Strukturvergleichs (im Folgenden Vergleich) wird eine Kopierroutine 46 (hier in Form eines davon umfassten ersten und zweiten Teils 46.1, 46.2 dargestellt) mit Programmcodeanweisungen zur Umsetzung von Daten für den oder vom alten Datenbereich 40 in Daten für den oder vom neuen Datenbereich 44 generiert. Auch das Generieren der Kopierroutine 46 oder deren Teile 46.1, 46.2 erfolgt bevorzugt im Engineeringsystem. Die Kopierroutine 46 wird dann im Zusammenhang mit dem Laden des neuen Softwarebausteins 42 in den Speicher 26 des Automatisierungsgeräts 12 ebenfalls zum Automatisierungsgerät 12 transferiert. Die Kopierroutine 46 umfasst einen ersten und einen zweiten Teil 46.1, 46.2; der erste Teil 46.1 wird vor und der zweite Teil 46.2 wird nach Ausführung des neuen Softwarebausteins 42 aufgerufen. Der erste Teil 46.1 der Kopierroutine 46 kann nochmals in einen einmalig aufgerufenen Abschnitt und einen zyklisch aufgerufenen Teil unterteilt sein (nicht dargestellt). Der einmalig aufgerufene Abschnitt des ersten Teils 46.1 der Kopierroutine 46 übernimmt eine logische, d. h. an den dort abgelegten Daten und deren Struktur orientierte Kopie des Inhalts des alten Datenbereichs 40 (des Instanz-DBs des alten Software-Bausteins 38) in den neuen Datenbereich 44 (den Instanz-DB des neuen Softwarebausteins 42). Der zyklische und entsprechend bis zum Ersetzen des alten Softwarebausteins 38 immer wieder aufgerufene Abschnitt des ersten Teils 46.1 der Kopierroutine 46 übernimmt eine logische Kopie derjenigen Daten, die von nicht von dem Austausch betroffenen Softwarebausteinen des Steuerungsprogramms erzeugt oder verändert werden, aus dem alten Datenbereich 40 in den neuen Datenbereich 44. Der einmalig aufgerufene und der zyklisch aufgerufene Abschnitt des ersten Teils 46.1 der Kopierroutine 46 können auch zusammengefasst sein. Dann umfasst der erste Teil 46.1 der Kopierroutine 46 nur einen zyklisch ausgeführten Abschnitt, der logisch die im alten Datenbereich 40 abgelegten Daten in den neuen Datenbereich 44 kopiert. Der zweite Teil 46.2 der Kopierroutine 46 umfasst einen zyklischen Abschnitt und wird entsprechend bis zum Ersetzen des alten Softwarebausteins 38 immer wieder aufgerufen. Er übernimmt eine logische Kopie derjenigen Daten, die vom neuen Softwarebaustein 42 in dessen neuem Datenbereich 44 erzeugt oder verändert werden, in den alten Datenbereich 40, so dass die vom neuen Softwarebaustein 42 verarbeiteten Daten auch den nicht von dem Austausch betroffenen Softwarebausteinen des Steuerungsprogramms zur Verfügung stehen.

Die auf diese Weise von dem zyklisch ausgeführten Abschnitt des ersten Teils 46.1 der Kopierroutine 46 erfassten Daten sind Daten, die sich aufgrund von Eingangsverschaltungen - d. h. die Daten werden dem alten/neuen Softwarebaustein 38, 42 als Eingangsdaten zur Verfügung gestellt - von anderen Softwarebausteinen ergeben. Als andere Softwarebausteine kommen dabei gleichermaßen Softwarebausteine in Betracht, die zum auf dem eigenen Automatisierungsgerät ausgeführten Steuerungsprogramm gehören, wie auch solche Softwarebausteine, die zu einem auf einem entfernten Automatisierungsgerät (z. B. einem Bedien- und Beobachtungsgerät) ausgeführten Steuerungsprogramm gehören. Entsprechend sind die von dem zweiten Teil 46.2 der Kopierroutine 46 erfassten Daten solche Daten, die sich aufgrund von Ausgangsverschaltungen - d. h. die Daten werden vom neuen Softwarebaustein 42 als Ausgangsdaten zur Verfügung gestellt - von anderen Softwarebausteinen ergeben.

Durch das Generieren der Programmcodeanweisungen zur Umsetzung von Daten für den oder vom alten Datenbereich in Daten für den oder vom neuen Datenbereich ist sichergestellt, dass das Steuerungsprogramm mit dessen nicht von dem Austausch betroffenen Softwarebausteinen weiterlaufen kann. Diese Softwarebausteine greifen eventuell auf den alten Datenbereich des auszutauschenden alten Datenbausteins zu. Damit diese Daten auch für den neuen Softwarebaustein zugänglich werden, erfolgt ein Umkopieren der Daten aus dem alten Datenbereich in den neuen Datenbereich.

Sobald die Kopierroutine 46 zur Verfügung steht, wird im Ablaufgruppenbaustein 34 eine Programmcodeanweisung zum Aufruf des alten Softwarebausteins 38 mit dem zugehörigen Instanz-DB, dem alten Datenbereich 40, gegen eine Programmcodeanweisung zum Aufruf der generierten Programmcodeanweisungen zur Datenumsetzung, also der Kopierroutine 46, und zum Aufruf des neuen Softwarebausteins 42 mit dessen Instanz-DB, dem neuen Datenbereich 44, ausgetauscht. Der Aufruf der Softwarebausteine 32 mit dem jeweiligen Instanz-DB (Datenbereich 36) durch den Ablaufgruppenbaustein 34 ist dabei durch vom Ablaufgruppenbaustein 34 ausgehende, beim jeweils aufzurufenden Softwarebaustein 32 endende Pfeile dargestellt. Ein entsprechender Aufruf des alten oder neuen Softwarebausteins 38, 42 oder der Kopierroutine 46 ist mit gestrichelten Pfeilen dargestellt, weil z. B. der Aufruf des alten Softwarebausteins 38 nicht dauerhaft ist und nach Einbeziehung des neuen Softwarebausteins 42 in die durch den Ablaufgruppenbaustein 34 erfolgenden Aufrufe entfällt. Ebenso ist der Aufruf des neuen Softwarebausteins 42 nicht dauerhaft, weil dessen Aufruf nicht vorgesehen ist, solange noch durch den Ablaufgruppenbaustein 34 ein Aufruf des alten Softwarebausteins 38 erfolgt. Entsprechend ist auch der Aufruf der Kopierroutine 46 nicht dauerhaft. Solange nämlich noch der alte Softwarebaustein 38 aufgerufen wird, erfolgt kein Aufruf der Kopierroutine 46. Wenn der neue Softwarebaustein 42 den alten Softwarebaustein 38 vollständig ersetzt hat und jede Verwendung von Daten im bisherigen alten Datenbereich 40 in eine Verwendung der Daten im neuen Datenbereich 44 umgesetzt wurde, ist eine weitere Verwendung der Kopierroutine 46 und entsprechend deren Aufruf nicht mehr vorgesehen.

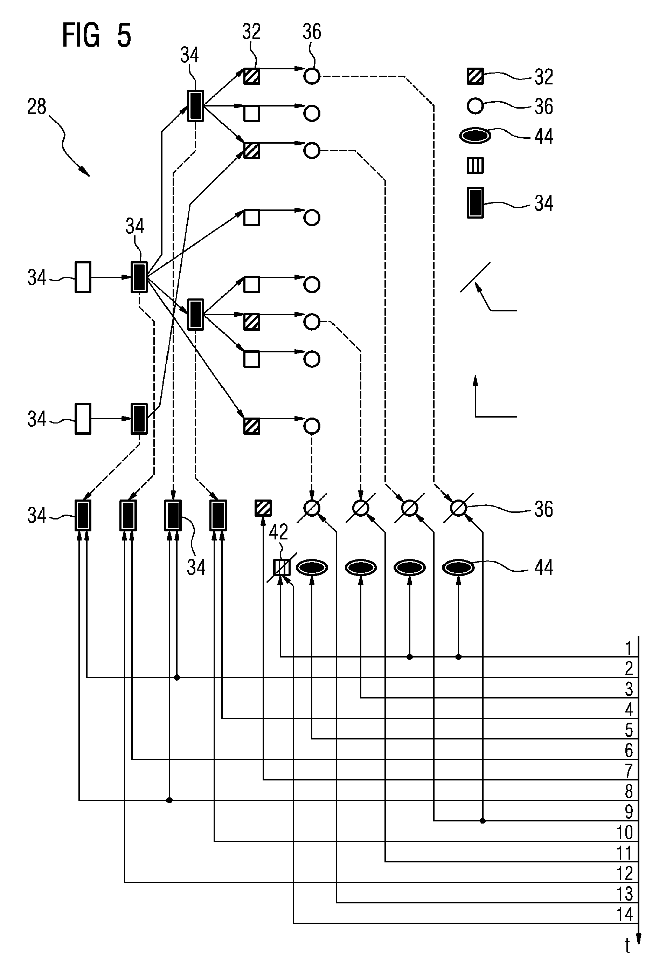

In FIG 5 wird mit weiteren Details der Austausch eines alten Softwarebausteins 38 gegen einen neuen Softwarebaustein 42 gezeigt. In einem oberen rechten Teil der Darstellung ist eine Legende mit den verwendeten Symbolen gezeigt. Die dort eingetragenen Bezugsziffern sind zur Vermeidung einer unnötigen Unübersichtlichkeit im restlichen Teil der Darstellung für die jeweiligen Symbole nicht in jedem Fall erneut eingetragen. Ein erstes Legendensymbol mit einem ankommenden vertikalen Pfeil illustriert die Darstellung des Anlegens einer Datenstruktur, z. B. eines Softwarebausteins oder eines Datenbereichs. Ein weiteres Legendensymbol mit einem ankommenden diagonalen Pfeil illustriert die Darstellung des Löschens einer Datenstruktur, und zwar zusätzlich durch Hinzufügung eines diagonalen Strichs, der auf dem die jeweilige Datenstruktur darstellenden Symbol als Durchstreichung erscheint.

In einem oberen linken Teil der Darstellung ist ein Steuerungsprogramm 28 (siehe auch FIG 4) mit einer hierarchischen Struktur der dort projektierten Aufrufe gezeigt. Das Steuerungsprogramm 28 umfasst eine Mehrzahl von Softwarebausteinen 32 und Ablaufgruppenbausteinen 34. Jedem Softwarebaustein 32 ist ein Datenbereich 36 zugeordnet. Ein unterer Teil der Darstellung zeigt über einer Zeitachse t exemplarisch die Vorgänge beim Austausch eines Softwarebausteins 32 gegen einen neuen Softwarebaustein 42.

Zu beachten ist, dass aufgrund der Darstellung der projektierten Aufrufe eine mehrfache Darstellung ein und desselben Softwarebausteins 32 nicht das mehrfache Vorhandensein dieses Softwarebausteins 32 im Steuerungsprogramm 28 meint. Der von dem Softwarebaustein 32 umfasste Programmcode ist nur einmal Bestandteil des Steuerungsprogramms 28; nur aufgrund eines mehrfachen Aufrufs erscheint ein und derselbe Softwarebaustein 32, z. B. der durch Schraffierung kenntlich gemachte Softwarebaustein 32, in der Darstellung in FIG 5 mehrfach. Die Verhältnisse im Speicher 26 des Automatisierungsgeräts 12 sind teilweise im oberen Teil der unteren Darstellung in FIG 5 illustriert. Dort sind die alten und neuen Datenbereiche 36, 44, einige Ablaufgruppenbausteine 34 und ein neuer Softwarebaustein 42 gezeigt.

Der neue Softwarebaustein 42 wird zum Zeitpunkt t=1 als temporärer Softwarebaustein angelegt. Dieser neue Softwarebaustein 42 ist zum Ersatz derjenigen Softwarebausteine 32 (= alter Softwarebaustein 38) vorgesehen, die im oberen Teil der Darstellung durch eine entsprechende Schraffur kenntlich gemacht sind. Der zu ersetzende Softwarebaustein 32 (= alter Softwarebaustein 38) wird im Steuerungsprogramm 28 mehrfach verwendet. Ein gleichzeitiger Austausch aller Aufrufstellen des zu ersetzenden Softwarebausteins 32 und der zugehörigen Instanz-DBs ist aufgrund der Vielzahl der Aufrufstellen in unterschiedlichen Ablaufgruppen und der Vielzahl der jeweils zugehörigen Datenbereiche nicht möglich, so dass der Austausch schrittweise erfolgt. Dafür wird betrachtet, wie und wo der zu ersetzende Softwarebaustein 32 (= alter Softwarebaustein 38) mit seinen Instanz-DBs (= den alten Datenbereichen 40) aufgerufen wird. Dazu wird im Folgenden auf die ausgefüllt dargestellten Ablaufgruppenbausteine 34 entsprechend deren vertikaler Abfolge in der Darstellung als erster, zweiter, dritter und vierter Ablaufgruppenbaustein 34 Bezug genommen. Die ausgefüllt dargestellten Ablaufgruppenbausteine 34 bezeichnen solche, die im Weiteren eine Änderung erfahren, wie weiter unten beschrieben werden wird.

Zwei zu ersetzende Softwarebausteine 32 (= alte Softwarebausteine 38) werden vom ersten Ablaufgruppenbaustein 34 aufgerufen. Entsprechend werden, ebenfalls zum Zeitpunkt t=1, zwei neue Datenbereiche 44 angelegt. Damit stehen auf Seiten des Automatisierungsgeräts 12, welches das Steuerungsprogramm 28 ausführt, der geänderte Programmcode, nämlich der neue Softwarebaustein 42, und Instanz-DBs, mit denen dieser jeweils arbeiten kann, nämlich zunächst zwei neue Datenbereiche 44, zur Verfügung. Der neue Softwarebaustein 42 ist also in den Speicher 26 des Automatisierungssystems 10 oder eines davon umfassten Automatisierungsgeräts 12 geladen.

Zum Zeitpunkt t=2 wird der erste Ablaufgruppenbaustein 34 ausgetauscht oder geändert. Die Änderung in dem Ablaufgruppenbaustein 34 - oder eine entsprechende Änderung in einem neuen Ablaufgruppenbaustein 34, der den ersten Ablaufgruppenbaustein 34 ersetzt - bezieht sich zumindest auf eine Änderung derjenigen Programmcodeanweisung (nicht dargestellt), die im Ablaufgruppenbaustein 34 den Aufruf des zu ersetzenden Softwarebausteins 32 kodiert. Jede derartige Programmcodeanweisung wird durch eine Programmcodeanweisung zum Aufruf des neuen Softwarebausteins 42 mit dessen Instanz-DB, dem neuen Datenbereich 44, ersetzt. Darüber hinaus werden in den Ablaufgruppenbaustein 34 noch vor und nach diesem Aufruf Aufrufe für die Kopierroutine 46 (in FIG 5 nicht dargestellt; siehe FIG 4) eingefügt. Mit der Änderung des ersten Ablaufgruppenbausteins 34 erfolgt unmittelbar die Verwendung des neuen Softwarebausteins 42 im Steuerungsprogramm. Ebenfalls zum Zeitpunkt t=2 muss, um Inkonsistenzen zu vermeiden, auch der vierte Ablaufgruppenbaustein 34, wie oben beschrieben, geändert werden, da er den neuen Softwarebaustein 42 mit demselben Instanz-DB aufruft wie der erste Ablaufgruppenbaustein 34.

Die hier und im Folgenden für eine strukturierte Darstellung der Abläufe verwendeten Zeitpunkte t=1, t=2, usw. sind Zeitpunkte oder Zeitabschnitte, zu denen oder während derer die beschriebenen Aktionen exemplarisch stattfinden. Für derartige Zeitpunkte eignen sich besonders so genannte Zykluskontrollpunkte. Zykluskontrollpunkte sind bei speicherprogrammierbaren Steuerungen spezielle Zustände während der zyklischen Abarbeitung des jeweiligen Steuerungsprogramms, z. B. Zyklusstart oder Zyklusende. Die genauen Zeitpunkte sind dabei nicht notwendig fix. Vielmehr kommt es auf die Reihenfolge der einzelnen Aktionen an. Zusätzlich muss dabei berücksichtigt werden, dass die in FIG 5 angegebenen Zeitpunkte t=1, t=2, usw. nicht notwendig äquidistant sind. Ebenso ist nicht erforderlich, dass zu jedem Zykluskontrollpunkt einzelne der beschriebenen Aktionen ausgeführt werden. Die Zeitpunkte t=1, t=2, usw. beschreiben also nichts anderes als eine zeitliche Abfolge. Zwischen zwei benachbarten Zeitpunkten, z. B. t=1 und t=2, können ohne weiteres zusätzliche für einzelne Aktionen des Verfahrens verwendbare Zeitpunkte liegen. Wenn also hier und im Folgenden von einer Gleichzeitigkeit die Rede ist, bezieht sich eine solche Gleichzeitigkeit nur auf die in FIG 5 dargestellten und für eine vereinfachte Beschreibung ausgewählten Zeitpunkte und Zeitabschnitte. Eine eventuell unter der dargestellten Zeiteinteilung liegende feingranularere Zeiteinteilung bleibt abgesehen von der vorstehenden Erläuterung für die weitere Beschreibung außer Betracht.

Zum Zeitpunkt t=3 wird ein weiterer neuer Datenbereich 44 angelegt, und zwar für denjenigen neuen Softwarebaustein 42, der vom dritten Ablaufgruppenbaustein 34 aufgerufen wird. Danach kann zum Zeitpunkt t=4 der dritte Ablaufgruppenbaustein 34 - wie oben beschrieben - ausgetauscht oder geändert werden, so dass auch dort der neue Softwarebaustein 42 aufgerufen und durch diesen der im Zeitpunkt t=3 angelegte, weitere neue Datenbereich 44 verwendet wird.

Zum Zeitpunkt t=5 wird ein nochmals weiterer neuer Datenbereich 44 angelegt, und zwar für denjenigen neuen Softwarebaustein 42, der vom zweiten Ablaufgruppenbaustein 34 aufgerufen wird. Danach kann zum Zeitpunkt t=6 der zweite Ablaufgruppenbaustein 34 ausgetauscht oder geändert werden, so dass auch dort der neue Softwarebaustein 42 aufgerufen wird.

Nach dem Zeitpunkt t=6 und vor dem Zeitpunkt t=8 sind alle Änderungen im Speicher des jeweiligen Automatisierungsgerätes, z. B. des ersten Automatisierungsgerätes 12, hinterlegt. Ab jetzt können alle Referenzen, also Ein- oder Ausgangsverschaltungen zu anderen Softwarebausteinen, vom jeweiligen alten Datenbereich 40 zum neuen Datenbereich 44 umgezogen werden, damit im Anschluss die Kopierroutinen wieder entfernt werden können. Das Umziehen externer Verschaltungen, also von Verschaltungen von oder zu Softwarebausteinen eines Steuerungsprogramms eines anderen Automatisierungsgeräts ist hier nicht gezeigt, kann jedoch optimiert ggf. mit der Änderung des Ablaufgruppenbausteins 34 erfolgen. Nach dem Zeitpunkt t=6 müssen auch andere Automatisierungsgeräte, z. B. das Bedien- und Beobachtungsgerät 16, neu geladen werden, da in den Folgeschritten geänderte Adressen ungültig werden.

Zum Zeitpunkt t=7 wird dem neuen Softwarebaustein 42 eine Referenz zugewiesen, die bisher den ersetzten, alten Softwarebaustein bezeichnet hat oder - wie dargestellt - der neue Softwarebaustein 42 wird unter der Referenz des ersetzten, alten Softwarebausteins neu geladen und ist damit (zunächst) zweimal identisch vorhanden.

Zum Zeitpunkt t=8 werden die Änderungen im Zeitpunkt t=2 am ersten und vierten Ablaufgruppenbaustein 34 quasi rückgängig gemacht, derart, dass diese so geändert werden, dass jetzt ein Aufruf des neu geladenen, neuen Softwarebausteins 42 wieder unter der ursprünglichen Referenz erfolgt. Daneben entfällt auch der bisherige Aufruf der Kopierroutine 46 wieder, da keine Referenzen auf den alten Datenbereich 40 mehr bestehen. Im Zeitpunkt t=9 werden die alten Datenbereiche 36 gelöscht, die die beiden Instanzen des aus dem ersten Ablaufgruppenbaustein 34 aufgerufenen, ersetzten alten Softwarebausteins benutzt hatten. Entsprechendes geschieht zu den Zeitpunkten t=10 und t=11 sowie t=12 und t=13 für den dritten bzw. zweiten Ablaufgruppenbaustein 34 und die im Zusammenhang mit dortigen Aufrufen verwendeten alten Datenbereiche 36. Zum Zeitpunkt t=14 wird der zum Zeitpunkt t=1 angelegte, (temporäre) neue Softwarebaustein 42 gelöscht, da er nicht mehr referenziert wird.

Die in FIG 5 illustrierten Abläufe basieren auf der Annahme, dass in einem Engineeringsystem das geänderte Steuerungsprogramm mit zumindest einem neuen Softwarebaustein 42 in der sich danach ergebenden geänderten Form vorliegt. Die Änderung des Steuerungsprogramms im Engineeringsystem ist offline möglich und beeinflusst nicht das Laufverhalten des (bisherigen) Steuerungsprogramms 28 im Automatisierungsgerät 12. Die geänderten Teile des Steuerungsprogramms im Engineeringsystem werden demnach sukzessive, wie oben beschrieben, an das Automatisierungsgerät 12 übertragen. Nach Abschluss des Übertragungsvorgangs entspricht das vom Automatisierungsgerät 12 ausgeführte Steuerungsprogramm 28 dem geänderten Steuerungsprogramm im Engineeringsystem. Während des Transfers der geänderten Programmteile und während des Einkettens dieser Programmteile in das Steuerungsprogramm 28 wird dessen Ausführung durch das Automatisierungsgerät 12 nicht unterbrochen. Der Austausch erfolgt also vollständig zur Laufzeit. Ein durch das Steuerungsprogramm gesteuerter oder überwachter technischer Prozess kann also ebenfalls ohne Unterbrechung fortgesetzt werden. Es ist ggf. mit einer kaum merklichen Verlängerung der Zykluskontrollpunkte zu rechnen; ebenfalls kann sich aufgrund der Kopierroutinen die Zyklusbelastung ggf. geringfügig erhöhen. Die fortgesetzte Ausführbarkeit des Steuerungsprogramms wird dadurch jedoch genauso wenig in Frage gestellt wie die fortgesetzte Steuerung und/oder Überwachung des jeweiligen technischen Prozesses.

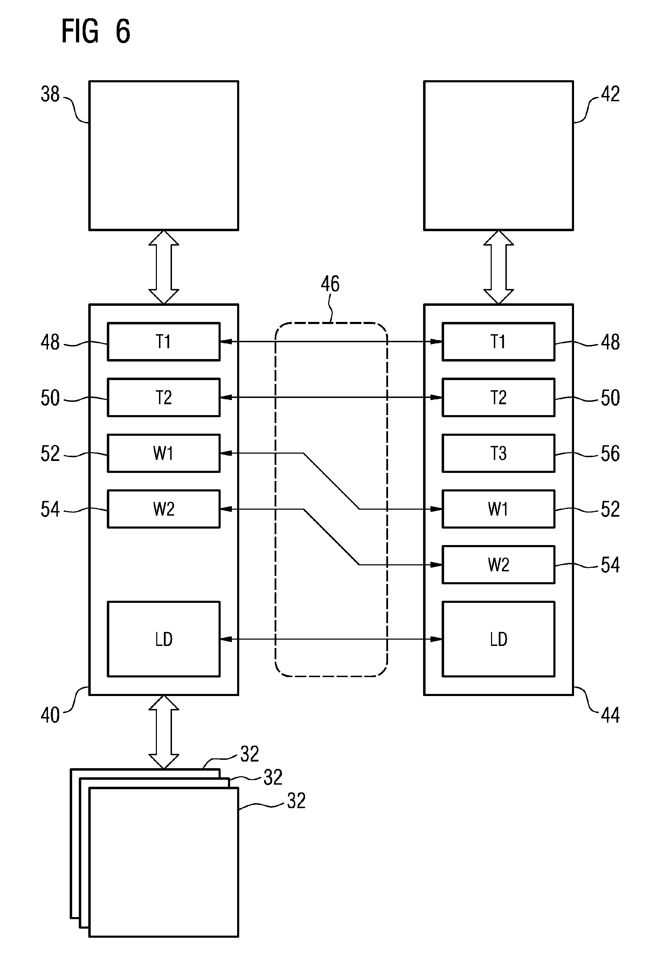

FIG 6 versucht den Ansatz gemäß der Erfindung, wonach Programmcodeanweisungen zur Umsetzung von Daten für oder vom alten Datenbereich 38 (FIG 4) in Daten für oder vom neuen Datenbereich 44 generiert und später bei der Ausführung des Steuerungsprogramms 28 (FIG 4) verwendet werden, graphisch zu verdeutlichen. Angenommen wird dafür, dass ein zu ersetzender alter Softwarebaustein 38 im Steuerungsprogramm 28 zumindest einmal verwendet wird, so dass dieses für den zu ersetzenden Softwarebaustein 38 zumindest einen Instanz-DB, den alten Datenbereich 40, umfasst. Exemplarisch wird für den alten Datenbereich 40 angenommen, dass dort ein erstes und ein zweites Temperaturdatum (T1, T2) 48, 50 und ein erstes und zweites Wegdatum (W1, W2) 52, 54 verwendet werden. Für den neuen Softwarebaustein 42 wird demgegenüber davon ausgegangen, dass dessen Verwendung und Integration in das Steuerungsprogramm 28 notwendig wird, weil ein drittes Temperaturdatum (T3) 56 von diesem zu be- oder verarbeiten ist. Auch anhand der schematisch vereinfachten Darstellung in FIG 6 ist ersichtlich, dass die Verwendung des neuen Datenbereichs 44 anstelle des alten Datenbereichs 40 nicht ohne weiteres möglich ist. Ein Zugriff auf eine dritte Speicherstelle im alten Datenbereich 40 liefert nämlich das erste Wegdatum (W1) 52, während ein Zugriff auf eine entsprechende Speicherstelle im neuen Speicherbereich 44 das dritte Temperaturdatum (T3) 56 liefert. Entsprechend ist also gemäß der Erfindung vorgesehen, dass Programmcodeanweisungen zur Umsetzung dieser Daten vom alten Datenbereich 40 zum neuen Datenbereich 44 und umgekehrt generiert werden. Diese Umsetzung ist in der Darstellung in FIG 6 durch die zwischen den jeweiligen Daten 48, 50, 52, 54 verlaufenden Doppelpfeile veranschaulicht und wurde an anderer Stelle auch als logisches Kopieren bezeichnet. Mit dem Kopieren sämtlicher Daten 48-54 aus dem alten Datenbereich 40 in den neuen Datenbereich 44 kann der neue Softwarebaustein 42 mit allen vom Steuerungsprogramm 28 und den davon umfassten Softwarebausteinen 32 be- oder verarbeiteten Daten arbeiten. Umgekehrt kann auch das Steuerungsprogramm 28 mit seinen Softwarebausteinen 32 mit allen bereits im Umfang des alten Datenbereichs 40 bekannten Daten 48-54 arbeiten, weil diese aus dem neuen Datenbereich 44 in den alten Datenbereich 40 kopiert werden und dort zum Zugriff durch das Steuerungsprogramm 28 und dessen Softwarebausteine 32 zur Verfügung stehen. Von dem Kopiervorgang mit erfasst werden auch lokale Daten (LD) des jeweiligen Softwarebausteins, die ebenfalls in dessen Datenbereich (= Instanz-DB) abgelegt sind; auch eine Änderung nur dieser lokalen Daten (LD) ohne Änderungen an der Schnittstelle des Softwarebausteins würde ein Umkopieren erfordern.

Wenn der neue Softwarebaustein 42 im Steuerungsprogramm mehrfach verwendet wird, erfolgt aufgrund jeder Verwendung ein Aufruf dieses Softwarebausteins 42 mit einem eigenen neuen Datenbereich 44. Bei einer mehrfachen Verwendung des neuen Softwarebausteins 42 ergeben sich entsprechend auch mehrere neue Datenbereiche 44 und mehrere Kopierroutinen 46 zur Umsetzung der Daten aus dem jeweiligen alten Datenbereich 40 in den jeweiligen neuen Datenbereich 44.

Die oder jede Kopierroutine 46 ermöglicht die Verwendung des neuen Softwarebausteins 42 in einem ansonsten unveränderten Steuerungsprogramm 28. Zur vollständigen Ersetzung des alten Softwarebausteins 38 durch den neuen Softwarebaustein 42 ist jedoch vorgesehen, dass dieser und der zugehörige alte Datenbereich 40 aus dem Steuerungsprogramm 28 entfernt werden. Eventuelle Zugriffe aus dem Steuerungsprogramm 28 auf den alten Datenbereich 40 sind dann nicht mehr möglich. Entsprechend muss das Steuerungsprogramm 28 auf Programmcodeanweisungen, die sich auf den alten Datenbereich 40 beziehen, durchsucht und dabei aufgefundene Programmcodeanweisungen geändert werden, so dass sie sich auf den neuen Datenbereich 44 beziehen.

Das Durchsuchen des Steuerungsprogramms 28 erfolgt bevorzugt anhand von dessen im Engineeringsystem vorgehaltener Kopie, welche die Basis für das Steuerungsprogramm 28 im Speicher 26 des Automatisierungsgeräts 12 ist, und zu den Zeitpunkten t=6 und t=7 gemäß der Darstellung in FIG 5. Dabei aufgefundene, betroffene Softwarebausteine 32 können im Automatisierungsgerät 12 ähnlich wie anhand von FIG 5 beschrieben ausgetauscht werden. Unter Umständen reicht es jedoch auch aus, den betroffenen Softwarebaustein 32 an einem Zykluskontrollpunkt neu zu laden, nachdem die Änderung einer Adresse einer verwendeten Variablen normalerweise keine Auswirkungen auf den Rest des Steuerungsprogramms 28 hat. Eventuell kommt auch in Betracht, an einem Zykluskontrollpunkt in einem geladenen Softwarebaustein den betroffenen Programmcode auszutauschen ("patchen").

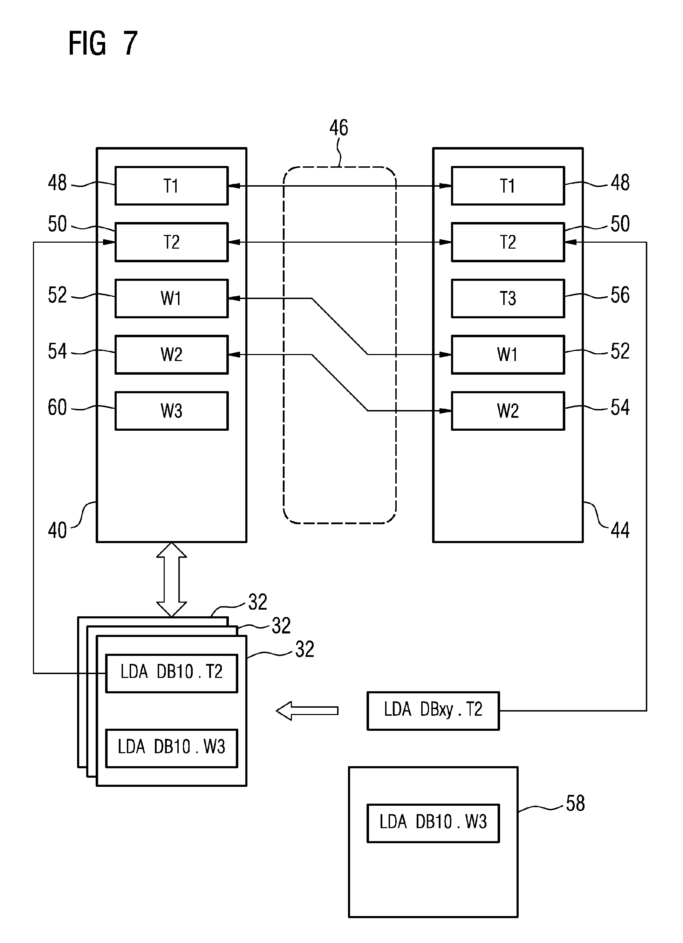

Das Durchsuchen und anschließende Ändern wird auch als "Mapping" bezeichnet. In FIG 7 ist dazu exemplarisch ein Softwarebaustein 32 mit einer Programmcodeanweisung dargestellt, deren Argument sich auf den alten Datenbereich 40 bezieht. Der alte Datenbereich 40 ist dabei in dem exemplarisch dargestellten Argument symbolisch bezeichnet, hier als "DB10" für "Datenbaustein 10". Das im alten Datenbereich 40 referenzierte Datum ist ebenfalls symbolisch dargestellt, hier als "T2". Die symbolischen Bezeichner "DB10" und "T2" haben eine numerische Entsprechung, so dass in dem vom alten Datenbereich 40 belegten Speicherbereich die mit dem zweiten Temperaturdatum 50 belegte Speicherstelle referenziert ist. Die numerische Entsprechung eines Bezeichners wie "DB10" kann als Startadresse des alten Datenbereichs 40 im Speicher 26 aufgefasst werden. Die numerische Entsprechung eines Bezeichners wie "T2" ist dann eine relative Adresse in Bezug auf die durch "DB10" definierte Startadresse. Die Adresse des in Bezug genommenen Datums kann durch Addition beider Adressen gewonnen werden. Das Ändern der aufgefundenen, sich auf den alten Datenbereich 40 beziehenden Programmcodeanweisungen in solche Programmcodeanweisungen, die sich auf den neuen Datenbereich 44 beziehen, erfordert also einen Austausch der Adresse, auf die sich das jeweilige Argument der Programmcodeanweisung bezieht. Bei einer Programmcodeanweisung mit "DB10.T2" als Argument reicht es aus, für den symbolischen Bezeichner "DB10" des alten Datenbereichs 40 den symbolischen Bezeichner des neuen Datenbereichs 44 einzusetzen (in FIG 7 dargestellt als "DBxx.T2", mit DBxy als symbolischem Bezeichner für den Instanz-DB, den neuen Datenbereich 44, den neuen Softwarebaustein 42). Bei einem symbolischen Bezeichner "DB10.W2" muss bei Zugrundelegung der in FIG 4 angenommenen Verhältnisse berücksichtigt werden, dass sich die Position des zweiten Wegdatums "W2" 54 im neuen Datenbereich 44 im Vergleich zur Position desselben Datums im alten Datenbereich 40 ändert. Entsprechend ist bei einer Programmcodeanweisung mit einem solchen Attribut auch die relative Adresse des jeweiligen Datums zu ändern.

Wenn beim Durchsuchen des Steuerungsprogramms 28 Programmcodeanweisungen gefunden werden, die sich auf den alten Datenbereich 40 beziehen und die nicht automatisch in sich auf den neuen Datenbereich 44 beziehende Programmcodeanweisungen geändert werden können, ist deren Übernahme in eine Aufgabenliste 58 vorgesehen. In FIG 7 ist diese Situation exemplarisch für eine Programmcodeanweisung mit dem symbolischen Argument "DB10.W3" dargestellt. Das Datum W3 bezeichnet ein drittes Wegdatum 60 im alten Datenbereich 40. Im neuen Datenbereich 44 ist jedoch kein drittes Wegdatum vorgesehen. Eine automatische Umsetzung ist entsprechend nicht möglich. Die betreffende Programmcodeanweisung wird in die Aufgabenliste 58 übernommen, wo sie zur manuellen Abarbeitung und Änderung zur Verfügung steht. Eine manuelle Änderung kann z. B. bedeuten, dass als drittes Wegdatum 60 im neuen Datenbereich 44 nur der niederwertige Teil des zweiten Wegdatums (W2) 54 angesprochen wird.

Wenn im Steuerungsprogramm 28 alle Programmcodeanweisungen, die sich auf den alten Datenbereich 40 beziehen, durch entsprechende, sich auf den neuen Datenbereich 44 beziehende Programmcodeanweisungen entweder automatisch oder manuell ausgetauscht sind, ist die Kopierroutine 46 entbehrlich und der neue Softwarebaustein 42 ersetzt mit seinem neuen Datenbereich 44 den alten Softwarebaustein 38 mit dessen altem Datenbereich 40 vollständig und die alten Bausteine 38, 40 können gelöscht werden.

Zusätzliche Komplexität ergibt sich bei der Anwendung des erfindungsgemäßen Verfahrens oder seiner Ausgestaltungen dann, wenn mehrere Geräte, z. B. neben einem Automatisierungsgerät 12 noch zumindest ein Bedien- und Beobachtungsgerät 16 (FIG 1), auf die vom Steuerungsprogramm 28 be- oder verarbeiteten Daten zugreifen müssen. Dann ist ein "Mapping", wie oben anhand von FIG 7 beschrieben, auch für jedes dort ausgeführte Steuerungs- oder Bedien- und Beobachtungsprogramm erforderlich.

Damit lässt sich die Erfindung kurz wie folgt darstellen: Es wird ein Verfahren zum Betrieb eines Automatisierungssystems 10, das als Automatisierungslösung ein Steuerungsprogramm 28 mit einer Mehrzahl von Softwarebausteinen 32 ausführt, mit folgenden Schritten zum Austausch zumindest eines Software-bausteins - alter Softwarebaustein 38 - zur Laufzeit des Steuerungsprogramms 28 gegen einen neuen Softwarebaustein 42 angegeben: Vergleichen eines zum alten Softwarebaustein 38 gehörigen alten Datenbereichs 40 mit einem zum neuen Softwarebaustein 42 gehörigen neuen Datenbereich 44; Generierung von Programmcodeanweisungen zur Umsetzung von Daten für oder vom alten Datenbereich 40 in Daten für oder vom neuen Datenbereich 44; Laden des neuen Softwarebausteins 42 und des neuen Datenbereichs 44 in einen Speicher 26 des Automatisierungssystems 10; Austauschen einer Programmcodeanweisung zum Aufruf des alten Softwarebausteins 38 gegen Programmcodeanweisungen zum Aufruf der generierten Programmcodeanweisungen zur Datenumsetzung und zum Aufruf des neuen Software-bausteins 42. Das Verfahren gewährleistet jederzeit die Konsistenz der Daten innerhalb des das Steuerungsprogramm 28 ausführenden Automatisierungsgeräts 10, aber auch in Bezug auf entfernte Automatisierungsgeräte, z. B. ein Bedien- und Beobachtungsgerät 16.

## Patentansprüche

1. Verfahren zum Betrieb eines Automatisierungssystems (10) mit einem Speicher (26), in dem als Automatisierungslösung ein Steuerungsprogramm (28) gespeichert ist und das durch eine vom Automatisierungssystem (10) umfasste Verarbeitungseinheit ausgeführt wird,
wobei das Steuerungsprogramm (28) eine Mehrzahl von Softwarebausteinen (32) umfasst, die bei dessen Ausführung durch einen ebenfalls vom Steuerungsprogramm (28) umfassten Ablaufgruppenbaustein (34) aufgerufen werden,
**dadurch gekennzeichnet,**
**dass** ein Austausch zumindest eines Softwarebausteins - alter Softwarebaustein (38) - zur Laufzeit des Steuerungsprogramms (28) gegen einen neuen Softwarebaustein (42) folgende Schritte umfasst:
― Vergleichen eines zum alten Softwarebaustein (38) gehörigen alten Datenbereichs (40) mit einem zum neuen Softwarebaustein (42) gehörigen neuen Datenbereich (44);
― Generierung von Programmcodeanweisungen zur Umsetzung von Daten für oder vom alten Datenbereich (40) in Daten für oder vom neuen Datenbereich (44);
― Laden des neuen Softwarebausteins (42) und des neuen Datenbereichs (44);
― Austauschen einer Programmcodeanweisung zum Aufruf des alten Softwarebausteins (38) im Ablaufgruppenbaustein (34) gegen Programmcodeanweisungen zum Aufruf der generierten Programmcodeanweisungen zur Datenumsetzung und zum Aufruf des neuen Softwarebausteins (42).

2. Verfahren nach Anspruch 1, wobei das Steuerungsprogramm (28) auf Programmcodeanweisungen durchsucht wird, die sich auf den alten Datenbereich (40) beziehen, und wobei dabei aufgefundene Programmcodeanweisungen geändert werden, so dass sie sich auf den neuen Datenbereich (44) beziehen.

3. Verfahren nach Anspruch 2, wobei dem neuen Softwarebaustein (42) eine Referenz zugewiesen wird, die bisher den alten Softwarebaustein (38) bezeichnet hatte.

4. Verfahren nach Anspruch 3, wobei die zunächst im Ablaufgruppenbaustein (34) ausgetauschten Programmcodeanweisungen wieder entfernt werden und an deren Stelle im Ablaufgruppenbaustein (34) eine Programmcodeanweisung zum Aufruf des neuen Softwarebausteins (42) unter der bisherigen Referenz des alten Softwarebausteins (38) eingefügt wird.

5. Verfahren nach Anspruch 4, wobei die vom alten Softwarebaustein (38) und vom alten Datenbereich (40) im Speicher (26) belegten Speicherbereiche freigegeben werden.

6. Verfahren nach Anspruch 2, wobei aufgefundene Programmcodeanweisungen, die sich auf den alten Datenbereich (40) beziehen und die nicht automatisch in sich auf den neuen Datenbereich (44) beziehende Programmcodeanweisungen geändert werden können, in eine Aufgabenliste (58) übernommen werden.

7. Verfahren nach Anspruch 4 und Anspruch 6, wobei die Aufgabenliste (58) zur manuellen Abarbeitung und Änderung der aufgefundenen, sich auf den alten Datenbereich (40) beziehenden Programmcodeanweisungen zur Verfügung steht und das Aufrufen des neuen Softwarebausteins (42) anstelle des alten Softwarebausteins (38) erst möglich ist, wenn die Aufgabenliste (58) geleert ist.

8. Verfahren nach einem der vorangehenden Ansprüche, wobei beim Austauschen einer Mehrzahl neuer Softwarebausteine (42) gegen eine entsprechende Mehrzahl alter Softwarebausteine (38) aus der Mehrzahl der neuen Softwarebausteine (42) jeweils sukzessive ein neuer Softwarebaustein (42) gegen einen entsprechenden alten Softwarebaustein (38) ausgetauscht wird und wobei eine Auswahl einer Austauschreihenfolge innerhalb der Mehrzahl der neuen Softwarebausteine (42) entsprechend einer jeweiligen Aufrufhierarchie des jeweiligen alten oder neuen Softwarebausteins (38, 42) erfolgt.

9. Automatisierungssystem mit einem Speicher (26) und einer Verarbeitungseinheit zum Ausführen eines in den Speicher (26) ladbaren Steuerungsprogramms (28), mit Mitteln zur Implementierung des Verfahrens nach einem der vorangehenden Ansprüche zum Austauschen eines neuen Softwarebausteins (42) gegen einen bisher von dem Steuerungsprogramm (28) umfassten alten Softwarebaustein, und zwar zur Laufzeit des Steuerungsprogramms.

10. Computerprogramm mit durch einen Computer ausführbaren Programmcodeanweisungen zur Implementierung des Verfahrens nach einem der Ansprüche 1 bis 8, wenn das Computerprogramm auf einem Computer ausgeführt wird.

11. Speichermedium mit einem durch einen Computer ausführbaren Computerprogramm gemäß Anspruch 10.
